# EUROPEAN PATENT SPECIFICATION

(11) **EP 2 062 637 B1**
(45) Date of publication and mention of the grant of the patent: **19.11.2014**
(21) Application number: 08020386.2
(22) Date of filing: 24.11.2008
(51) Int. Cl.: B01D 53/14, B01D 53/18, C02F 3/06, C02F 1/00

(54) **Device for scrubbing polluted gases and the method of scrubbing polluted gases combined with biological treatment in the closed cycle of scrubbing water**
Vorrichtung zum Waschen von verschmutzten Gasen und Verfahren zum Waschen von verschmutzten Gasen kombiniert mit biologischer Behandlung im geschlossenen Waschwasserkreislauf
Dispositif d'épuration de gaz pollués et procédé d'épuration de gaz pollués combinés avec un traitement biologique dans le cycle fermé d'épuration de l'eau

(30) Priority: 26.11.2007 BR 705256
(43) Date of publication of application: 27.05.2009
(73) Proprietor: Kraus, Hans Georg, 04662002 Sao Paulo (BR)
(72) Inventor: Kraus, Hans Georg, 04662002 Sao Paulo (BR)
(74) Representative: Marek, Joanna

(56) References cited:
- EP-A- 0 282 750
- WO-A-01/58558
- WO-A-92/08676
- WO-A-93/22245
- DE-A1- 2 020 207
- DE-A1- 2 656 689
- GB-A- 2 055 613
- US-A- 4 832 848

## Description

The present invention relates to a device used for scrubbing polluted gases, organic vapours, odours and other aggressive particles, that is combined with a device for biological treatment of the scrubbing water (water used for the scrubbing). The purified water is returned to the process or released to the environment without polluting it. The present invention relates also to the method of scrubbing polluted gases connected with the biological treatment of the scrubbing water in a closed cycle.

Thus the present invention relates to the purifying device applicable to many branches of industry and agriculture used for eliminating odours and organic vapours present in gases released in the process of painting, in the production of paints, in digesters of fats manufacturing plants, fragrance essences and other processes, i.e. the gases polluted with volatile organic compounds that smells and have unfavourable and sometimes harmful influence on health.

### Background of the invention

Any traditional process of eliminating gas pollutants involves the use of afterburners that require high temperatures up to 600°C to heat up gases occurring at ambient temperature and burn contaminant substances or volatile organic compounds.

Large amounts of heat energy usually produced during burning of natural gas or fuel oil generate high operational costs and further on large amounts of CO₂ as well as NO₂ and CO.

Good results as regards burning of waste gases are achieved in well-designed afterburners. In such afterburners total elimination of hydrocarbons or their conversion into CO₂ and water takes place. However, a high consumption of fuels (gas or oil) needed to obtain a required temperature is its disadvantage since it leads to high operational costs. The fuels used in these processes are fossil fuels and therefore cause huge pollution emissions assessed at 10 or 20 times larger than in case of emissions resulting from stechiometrical oxidation of volatile organic gases being eliminated.

Such conditions are contrary to the stipulations of the Kyoto Protocol on reduction of greenhouse gas emissions.

Processes of catalytic burning bring better results, whereas full burning of organic compounds occurs in lower temperatures and at concentrations larger than 6.000 mg/Nm³, without the need to use additional fuels.

In case of gases of lower concentration correspondingly more fuel is required to maintain temperatures ensuring complete burning, however greater amounts greenhouse gas (CO₂) and other undesirable gases like NO₂ and CO are produced.

At the concentrations of organic compounds lower than 3.500 mg/Nm³, considerable amounts of gas fuel or oil are needed and that means eight times larges emissions of CO₂ in comparison with stechiometrical oxidation (complete) or direct conversion of compounds into CO₂ and H₂O.

Generating large amounts of greenhouse gases coming from these processes along with the excessive consumption of valuable power resources speaks against the devices of that sort. The use of such devices should be replaced with the use of new devices and a method ensuring total elimination of waste gases and what follows thereby limiting the emission of CO₂ and simultaneously limiting the consumption of fuels.

Using presently applied biological filters that decompose biological compounds in the method being in compliance with the stipulations of the Kyoto Protocol depends on, however, preferable climatic conditions and that means limitation of their efficiency and functionality. Besides that, they require large spaces in order to be installed and long periods of decomposition of organic substances, which leads to constructing large-sized systems of average efficiency, usually not effective enough to meet the current norms of emissions for the values below 50 mg/Nm³.

In the traditional sense treatment of sewage containing organic contaminants is considered to be complicated due to the ineffectiveness of traditional processes of flocculation, flotation and decantation as well as unpredictable effects of the biological decomposition in the sewage treatment systems.

On the other hand, the systems for scrubbing gases characterized with effectiveness as regards the elimination of these pollutants require regular scrubbing water changes so that the pollutants could not achieve the maximum concentration as it causes the decrease in the effectiveness of a saturated component removal thus influencing negatively the effectiveness of scrubbing. Therefore, although the solution of atmospheric problems is of great importance, what is faced is another problem connected with quantity and quality of produced sewage that speaks to the disadvantage of this sort of accepted solution whose only solution is repeated burning.

Document EP 0 282 780 A1 discloses a method and device according to the preamble of claim 1 and the preamble of claim 7, respectively, combining in a closed cycle scrubbing of polluted gases with scrubbing water and biological treatment of the scrubbing water.

### The nature of the invention

The disclosed invention consists in combining the system of scrubbing contaminated gases in a vertical, scrubbing tower where aeration by means of serial spraying of water (molecules) drops, creating multiple falls of water and fluidized beds (suspensions, water mist) eliminates pollutions by evoking considerable liquid oxygenation, involving absorption (dissolution of the gas pollutants by liquid), condensation (liquefaction) and interception along with adsorption (accumulation of gas components on the outer and inner surface (in the pores) of a solid body) and biological decomposition of pollutants in the closed system of the scrubbing water treatment.

The objects are achieved by a method according to claim 1 and a device according to claim 7.

The most characteristic feature of this system is a specific method of scrubbing that by the application of numerous spraying nozzles (5) arranged on many layers inside the vertical, scrubbing tower of the scrubber device, allows to produce a considerable amount of drops and mist (9) that has very large surface, that surface is created in a washing fluid that precipitates on numerous conic concentric rings (6) arranged on the inner side of the scrubbing tower wall between the certain ring segments (24) of nebulizers' (spraying nozzles) resulting in the formation of subsequent cascades (25), increasing the time that water remains flotation materials in the scrubbing tower and that is the factor improving the gas scrubbing due to greater contact and longer time of exposition between a liquid (9) and gases, ensuring also strong aeration and, consequently, absorption of oxygen by the scrubbing liquid that will be the subject of the biological conversion (decomposition) in an adsorptive filter located next to the scrubber by purifying the scrubbing water and keeping the minimum concentration of pollutants in it.

Adsorbent (material that catches pollutants) in the form of an activated carbon causes the elimination of pollutants from scrubbing water which is cleaner when it returns to the recirculation tank.

Specialized bacteria cultures that feed on organic pollutants removed from gases decompose them by converting all hydrocarbons into CO₂ and water and thereby regenerating the adsorbent (activated carbon), keeping it always in good condition so that it could adsorb pollutants constantly being supplied by the scrubbing water and next return the clean water to the recirculation tank which always operates at low concentrations of pollutants ensuring thanks to this method the maximum effectiveness of scrubbing process which provide to a large content of oxygen being introduced to recirculation water and that ensures the maximum efficiency of biological decomposition in which oxygen is a must for bacteria to "breathe".

The scrubbing tower in combination with simultaneous purification of air and gases as well as oxygenation of water and sewage becomes a perfect solution to eliminate from a stream of gases the pollutants, including solids, liquids and gaseous organic products and their odours by transferring them to the scrubbing water which in the closed cycle is constantly undergoing treatment by means of biological filters equipped with the function of biological decomposition converting organic compounds in CO₂ and water and removing non-organic compounds outside.

Contrary to thermal oxidization and ordinary scrubbing the integrated system according to the invention allows to achieve really satisfactory results enabling the removal of up to 97% (ninety seven per cent) organic pollutants present in gases per one stage and eliminating also unwished materials at very low operational costs which constitutes quite an incentive to implement and operate this system.

In the solutions carried out according to the invention and involving also the system of biological treatment it is necessary to apply special methods as long as the target is to achieve high effectiveness of scrubbing and purification of gases, as well as ensuring processes that would be practically free from sewage intended for removal (by-products of the purification process).

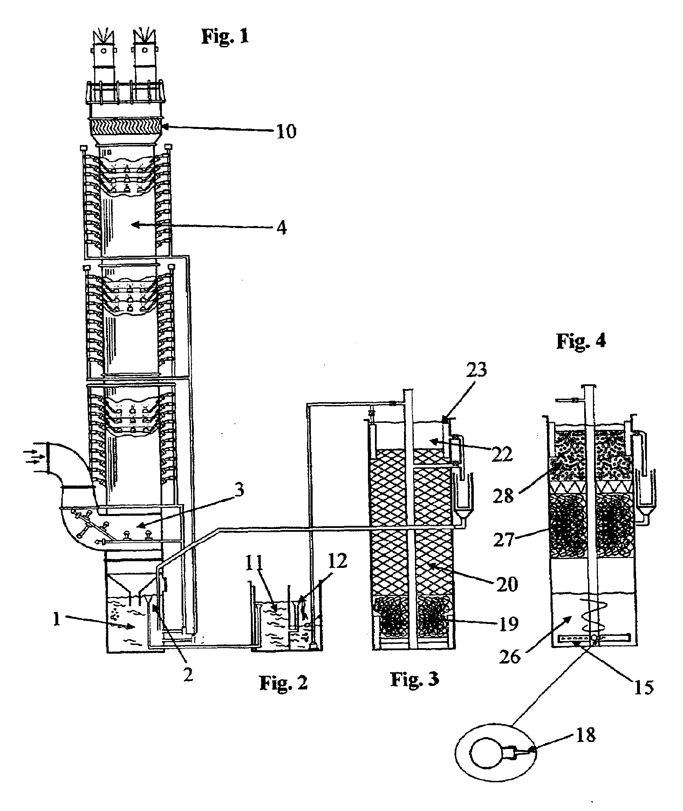

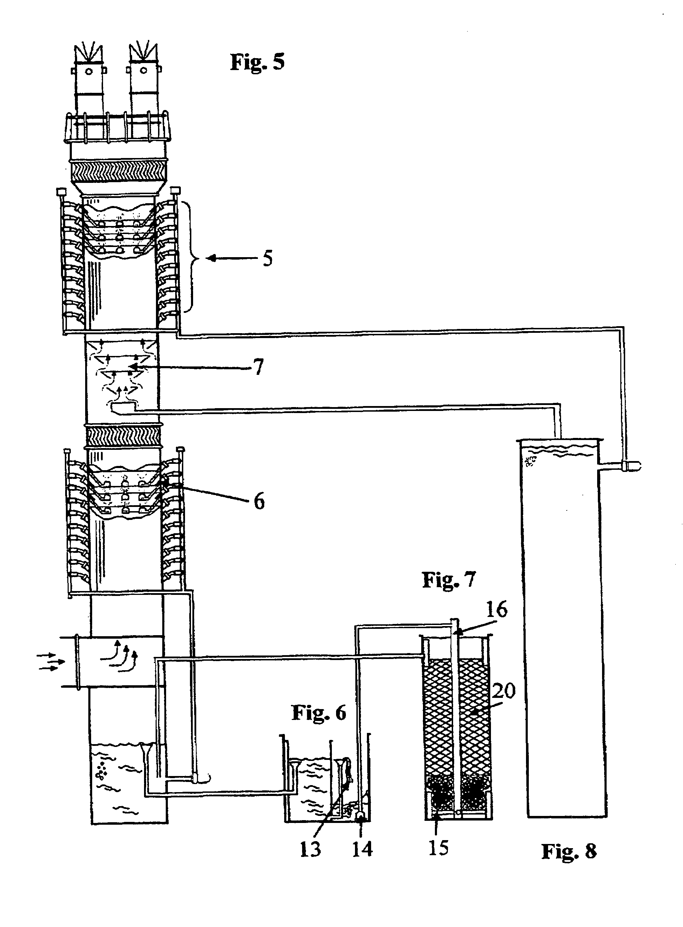

The scrubbing tower (fig. 1 and 5) for scrubbing gases and oxygenation of scrubbing liquid is characterized in that it has many spraying nozzles (5) arranged in series in such a way so as to have gases go through all certain ring segments (24) layers where spraying of liquid takes place, while depending on the capacity and diameter of the scrubbing tower, each series may contain a groups of ten nozzles placed on the same uniform plane to keep uniform concentration of drops.

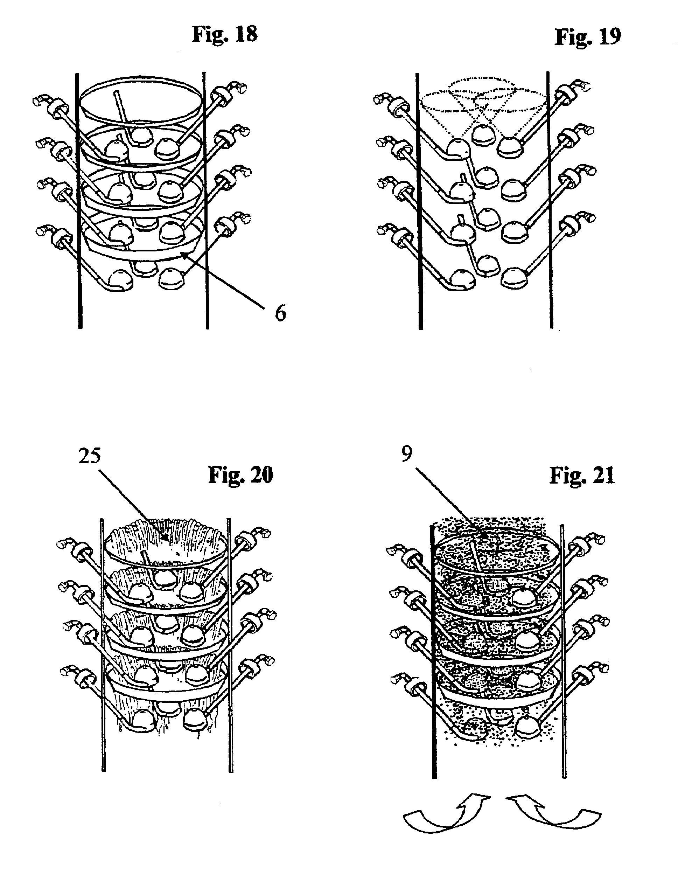

To achieve the maximum effectiveness (intraphase surface (contact of gases and liquids) of the mixing factor of water environments and gases (or air) and the maximum absorption of gases or air by sprayed liquid as well as possibly the smallest friction losses of in due to the energy saving the spraying should be carried out at the angle of 15 and 45°, where as regards the cost/profit ratio the optimal value amounts to 35°, while the pipes feeding nozzles should have factory angles identical with angles of (spraying) atomization or approximate ones so as to avoid the situation in which the pipe will intercept the spectrum sprayed. The rings (6), which are also arranged in series between two reaction points of the atomized liquid and in decreasing order (fig. 18, 20 and 21) as approaching to the top of the scrubbing tower, determine the decrease in speed of gases going through, by loading a cloud with the superiority of small and light drops from lower layers (spheres) where higher speeds of gases move upwards, lift and keeping in the suspension state the medium drops produced in the intermediate layers of the scrubbing tower where average speeds are maintained and intercept small drops by nebulization of drops that are larger, heavier and have lower speeds at the top of the scrubbing tower (fig. 21). These rings (6) or lateral elements intercepting the sprayed fluid are of great importance as they determine and differentiate speeds inside the scrubbing tower, what to a large extent increases the amount of suspended drops and contributes to serious increase in the absorption of oxygen and gases by the liquid subject to recirculation due to the large surface of contact and as a result of numerous falling cascades (25) whose drops at the walls of the scrubbing tower fall to a next ring where they are collected to fall further to a lower ring joining the drops sprayed in each layer and creating real waterfalls (fig. 20), where, under the influence of turbulences caused by drops and sheets of water hitting the base of the scrubbing tower while falling, large amounts of oxygen and gases as well as the recirculation fluid are interconnecting fulfilling the condition necessary to subsequent biological treatment, particularly when the organic products like solvents, penetrating odours coming from the processing of fats, feathers, blood and materials coming from decomposition processes are the pollutants to be removed.

The vertical construction along with series of spraying nozzles and lateral rings allows applying the multiphase scrubbing technique (fig. 1) or the division into spheres characterized with distinct features of scrubbing in the same scrubbing tower (fig. 5).

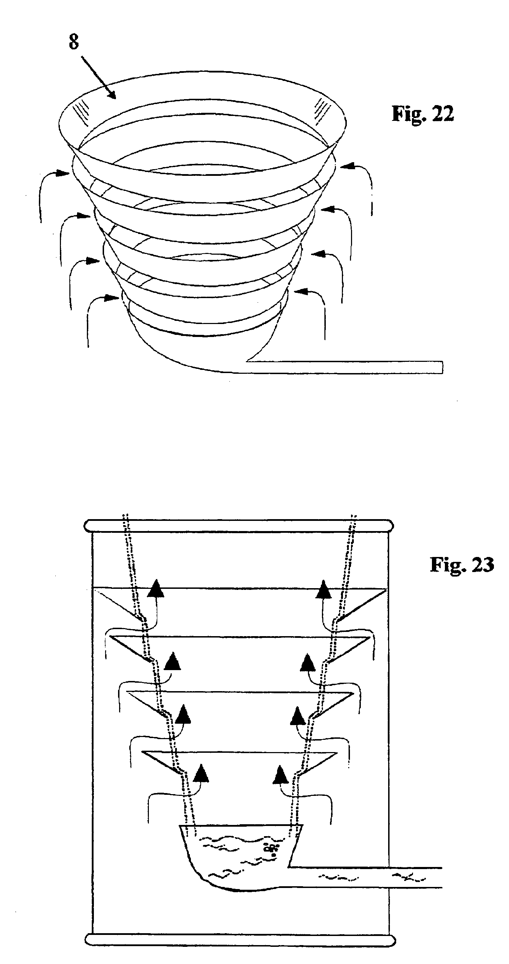

The device (fig. 22 and 23) is designed to serve as a ring flow separator (7), this device consisting of cones (8) divided into sections arranged concentrically, collinearly and away from one another enables the flow of gases from lower to higher sphere by creating overlapping shutters, making, however, the flow of water from the higher sphere to lower sphere impossible since it separates neutralizing liquid into independent sectors and due to that inside the same scrubbing tower different reactions of absorption with various scrubbing liquids may occur. Thus e.g. scrubbing may be carried out with the use of an acid fluid in the first sphere of scrubbing, scrubbing with the use of an alkaline fluid in the second phase and even scrubbing with an oxidizing fluid of a reducing fluid in the third sphere with no possibility of interactions provided that the requirement of exercising caution is observed while intercepting fluids by separating devices which direct the fluids into different tanks (fig. 8) so that they could return to the system by means of spraying nozzles (5) appropriate for particular spheres of scrubbing.

Continuous purification of water in scrubbing systems, whose aim is to remove organic compounds, is to prevent from the concentration of solvents leading to the saturation condition, i.e. to prevent from achieving maximum value of concentration of organic compounds and scrubbing water above which water loses its feature of dissolving a given compound thus restricting, and sometimes even eliminating the scrubbing tower's capacity to continual absorption of pollutants.

Characteristic and operation of this type of scrubbing combined with the biological action leads to ensuring favourable conditions for the elimination of pollutants from gases, ensuring considerable amounts of oxygen and the determination of a fixed and closed mode of removal of pollutants from gases by consecutive transfers of scrubbing liquid and consequently effective sewage treatment where pollutants serving as nutritional components for microorganisms are decomposed and converted into CO₂ and water, the water being again clean and ready to effectively absorb new organic product. Continuously cleaned water forms a closed circuit in which as a result of continuous pumping of water into the treatment system and to the scrubbing tower low concentrations of solvents and organic products are kept thus meeting the critical condition of high efficiency of scrubbing processes.

In order to increase the attractiveness of the devices serving to control pollution for an entrepreneur who is made to keep the emission of pollutions formed during production processes under control and to motivate him to have these devices in the operational readiness condition, it is a must to limit the costs of implementation and operation. Due to the fact that conventional thermal regeneration of an adsorbing element requires complicated devices, labour-consuming activities, including frequent removal and change of these materials, this system and devices were developed in such a way so as to colonize the adsorbing elements by microorganisms which cause their regeneration at minimum costs.

The structure of these filters may be of varied nature. They are selective biological filters classified according to their type, quality and organic material concentration. The basic, vertical and cylindrical tank (fig. 3 and 7) having one central pipe (16) at its disposal for introducing sewage consists of a distributor (15) of scrubbing liquid or sewage located at its bottom part and is equipped with the function of uniform distribution in the lifting flow without generating preferential routes in the first section filled with a mesh material (19) that the whole liquid flows through leaving there substantial part of its pollutants. In the second chamber (20) which is filled with granulated carbon the remaining pollutants are intercepted and then the third chamber (22) placed on the very top collects purified water and directs it back to the recirculation tank (1) completing this way the whole cycle or directs it to the second stage (fig. 4) in case of high concentrations where passing through series of filter becomes a necessity.

More sophisticated systems whose aim is to improve the process of biological decomposition of organic compounds use biological filters from adsorbing elements that are continuously regenerated and require multistage use of a filter consisting of three or more treatment sections.

In order to increase the outer surface to the maximum, to obtain possibly the most appropriate geometrical access as well as the best capacity and distribution of input contractions movable powder beds serving as an adsorbing material in the form of activated carbon powder are made use of. The carbon powder due to its feature of instant water imbibing, high absorbability and little size is characterized by the fact that its precipitation occurs on lower layers of conventional systems, cumulating on the layers close to the bottom.

In order to avoid plugging of the nozzles of the sewage distributor of the device used for biological treatment with particles of carbon powder which loses the features of a suspension when the system gets paralyzed, what is used is an elongated and flattened flexible tube (18) with a transverse opening at one of its ends, the flexible tube is constructed and fitted in such a way so as to open like a pipe to distribute sewage and to close when the flow is stopped thus preventing the particles from reaching the distributor (15).

In this case both during one stage as well as many stages the first section (26) of the tank is filled partly with carbon powder while sewage injection nozzles and bubblers (spargers) using compressed air induce energetic mixing which keeps the powder in suspension creating a totally uniform surface that is controlled as regards the concentration maintain within the limits from 5 to 70%. This dynamic surface does not allow high concentrations of carbon at the input sphere to be created which is the factor that in combination with regulated geometry of injectors at the input of sewage that are unloaded centrifugally makes the creation of preferential routes exerting their negative influence of the system efficiency impossible. It increases its effectiveness. Moreover, due to fluidity of the suspension created by carbon powder and sewage the first stage can be easily changed if needed without the necessity to paralyze or dismantle the system and its filters. The second section (27) of the tank, whose role is to complete the first one and to prevent powder from lifting to the next section, ensures the outer surface made of mesh material (19) composed of freely arranged fibres creating a huge labyrinth that the sewage treated earlier in the first section must go through leaving particles of carbon powder and pollutions behind. This section can be filled with a mesh material coated with activated carbon whose particles are stopped in the labyrinth which as the device permanently fixed constitutes an outer surface of effective exposition to colonies of microorganisms. Due to the fact that a fluid is in close contact with these surfaces, decomposition of the smallest concentrations of organic compounds still present in sewage takes place. The third section (28), most frequently the last one, though not in all solutions, is formed from a durable filling made of activated carbon or a mix of adsorbing materials through which as matter of fact a clean fluid flows, constitutes the area where residues of pollutions are eliminated, afterwards the sewage is redirected to gas scrubber or other stages. These stages are carried out in turn and always depend on kinds and concentrations of existing pollutants.

An acceptance of a particular configuration of a scrubbing tower, where scrubbing liquid is finely fragmented into milliards of drops which unlike in the traditional systems are in contact with gases for a much longer period enabling thus by absorption the transfer of pollutants through the fluid to a biological filter where as a result of total impossibility of preferential routes occurrence no part of gases could pass through the system without undergoing effective scrubbing (e.g. towers with filling), ensures the creation of a fluidal bed thanks to its vertical structure, numerous spheres of nebulization, and since it allows to increase the content of dissolved oxygen it meets to the ideal extent the conditions for perfect combination of a gas scrubber and a waste water treatment plant that could together create one system capable of destroying and eliminating organic pollutants in a single operation.

A biological filter is combined with the system by a stepping-filtering device which is capable of removing insoluble materials, such as paints, powders, lubricants, oils and other waste intercepted by the scrubbing tower.

The application of such system becomes a necessity when there is a need to avoid operational problems like congestions and pollution of adsorptive elements used in a biological filter. Basically it may consist of a distributive tank (fig. 2) where a flotation material such as paint or dye continuously overflows from the tank of scrubbing tower to the distributive tank from which it may be removed mechanically or even filtered sometimes, however if so a saturated filtering element must be later on removed.

A biological filter is a real system for treating sewages containing large amounts of organic materials, especially solvents. However, there are also other compounds, such as among others: fodders, lubricants, oils, blood, bone and fish meals, all of them characterized with specific odours that may be decomposed in this type of filter but the filters used for their removal can be fairly simple, i.e. with a single chamber whose closed mechanic structure contains a specified amount of an adsorptive material or a fixed or mobile filling where strains of bacteria or other microorganisms may accumulate, which is a characteristic requirement connected with the use of microorganisms. A polluted liquid passes through this structure, which is in the form of a tank filled with an adsorptive material and/or a filling, leaving there organic pollutions which are then decomposed by microorganisms present in numerous colonies that feed on these compounds transforming them into CO₂ and water, regenerating at the same time the adsorptive element. What is crucial to ensure such configuration of the elements of the filling that would enable the flow without the occurrence of preferential routes and excessive speeds that could prevent from accumulation, contact of pollutions with surfaces and adsorption by a filtering material.

The use of the kind of mash material (19) than can be produced by embossing fibres of slightly arched formats from such materials as PP, PF, PVC and polyamide that is still in semi-solid state while coming out of the embossing stage are subject to cooling by means of a powder of an adsorptive material like carbon or activated carbon and then coated with this powder, afterwards as a result of shaking and vibrations the tangled fibres form real labyrinths, that are ideal to ensure perfect contact between sewage and microorganisms. This sort of structures made of fibres coated with activated carbon are ideal to accumulate microorganisms, it should be pointed out that carbon adsorbs organic compounds to the inner side of molecular structure where large gaps or pores create attractive forces that stop and adsorb these compounds.

In the sort of adsorptive element used that is characterized with large macropores and sizes exceeding three microns, the biological activity, which constitutes the crucial feature of this invention, does not allow achieving the state of saturation as it keeps this element in the state of continuous regeneration by means of microbes. The presence of macropores of appropriate sizes provides microorganisms with areas or surfaces much larger than ordinary outer surface of an adsorbing molecule, thus allowing large colonies to settle on limited surfaces of an adsorptive material.

To avoid the situation when excessive concentrations of organic compounds restrain the reaction of decomposition carried out by microorganisms next to sewage inlet, such inlet can be fixed on different levels.

Biological activity consisting in the decomposition evoked by microorganisms settled in numerous and large colonies on adsorbing elements leads to creating enzymes enriching scrubbing water thus improving their efficiency in the process of gas scrubbing that is restarted cyclically.

This way sewages redirected to recirculation and nebulization in the scrubbing tower are in their clean, enriched form ready to remove new pollutants at the same time preventing from the concentration of solvents in the recirculation tank of the scrubber that always operates with the water of good quality thus reducing this way the costs of upkeep and use and wear of pumps as well as operational costs and eliminating the necessity of frequent change of the scrubbing water. These are the factors that restrict the possibility of traditional system usage.

This technique of adjusting systems designed for gas scrubbing to dissolve large amounts of oxygen which itself improves the efficiency of a biological treatment system by creating enzymes that contribute to the productivity of water in scrubbing recirculation limiting radically the concentration of volatile organic compounds, ensure constant productivity, high efficiency and minimum operational costs.

The device for scrubbing gases consists of many overlapping parts that form a cylindrical vertical scrubbing tower (fig. 1 and 5) whose base is the recirculation tank and the storage tank (1) which is equipped with a flow element (2) restricting the surface through which the polluted liquid stored before is transferred to the distributive tank (fig. 2). A unit of gas input placed tangentially is composed of a centrifugal diffuser (3) which sets gases in a spiral motion when they lift up the scrubbing tower. In gas scrubbing modules (4) there is one or more different series of spraying nozzles (5) arranged in such a way that they overlap with rings (6) of the circumferential interceptor of a nebulized fluid. The alternative device of a ring flow separator (7) consists of cones (8) divided into sections arranged concentrically, levelled and away from one another which contribute to the formation of overlapping shutters intercepting a fluid (9) from the scrubbing module (4). The whole unit is closed with a drop arrester (10) consisting of numerous ribs set in parallel to one another and perpendicularly to the scrubbing tower.

The intermediate tank serving as a distributive tank (fig. 2) is placed between the distributive tank (1) and the biological treatment tank (fig. 3 or fig. 4) and has the form of a cylindrical tank and is equipped with a sort of vessel (11) or the first section from which at the first stage a flotation material is removed, at the same time it is also equipped with one flow element (12) restricting the surface through which a liquid flows to the main distribution tank (13) or the second section where in the second stage the remains of a supernatant from scrubbing fluid are removed which by means of a suction pump (14) is transported to the biological treatment tank (fig. 3 or fig. 4).

The device for the biological treatment of sewages produced in the scrubbing tower (fig. 1 or fig. 5) consists basically (fig. 3) of a cylindrical vertical tank composed of different sections overlapping one another and is equipped with the basic first section that collects sewages from the upper part by the inlet channel located centrally and leading to the distributor (15) where through the pipes (16) with the endings in the form of flattened flexible tube (18) sewages that are distributed uniformly to the lowest part of this cylindrical tank through the mash material (19) placed inside this section are simultaneously set in spiral motion of the lifting flow without the formation of preferential routes. Through the second chamber (20) or the second section closed with the determined amount of adsorbing material sewages inflowing from the previous chamber pass towards the third chamber. The third chamber (22) or the third section equipped with a filtrating fabric (23) is designed to arrest particles of adsorptive means possibly brought by scrubbing water at the final stage of the process carried out in this device.

At the exit, the cleaned wastewater coming from the biological wastewater treatment system is stored in the recirculation tank from which it is pumped to the spraying nozzles (5) of the vertical scrubbing tower, beginning another new scrubbing and waste water treatment cycles.

The construction configuration of the presented examples of this invention execution is of primary nature, due to the fact that the device has a modular structure whose parts, sections, sectors and spheres described above need to be combined or arranged according to the needs dependant on a type, volume and/or concentrations of pollutions that are to be eliminated while scrubbing and on the biological treatment occurring later on that will be used in various variants in order to enable possibly the best combination of systems.

To understand the invention better it is illustrated in the enclosed figures where:
fig. 1 to 3 present the sectional view of the devices entering into the composition of the system for gas scrubbing combined with biological treatment in a closed cycle of scrubbing water, while the fig. 1 illustrates the vertical scrubbing tower with three scrubbing modules (4); fig. 2 illustrates the intermediate distributive tank and fig. 3 illustrates the device used for essential biological treatment or the first stage;
fig. 4 presents the sectional view of the alternative example of making the device used for essential biological treatment or the second stage;
fig. 5 presents the sectional view of the alternative example of making the vertical scrubbing tower with two scrubbing modules (4), while the section located higher is curtained by the ring flow separator (7) connected directly to the device for the biological treatment (fig. 8);
fig. 6 presents another view of the distributive tank visible on the fig. 2;
fig. 7 presents the view of another example of making the device used for essential biological treatment visible on the fig. 3;
fig. 8 presents the view of another example of making the device for essential biological treatment used in case of sewages intercepted by the ring flow separator (7);

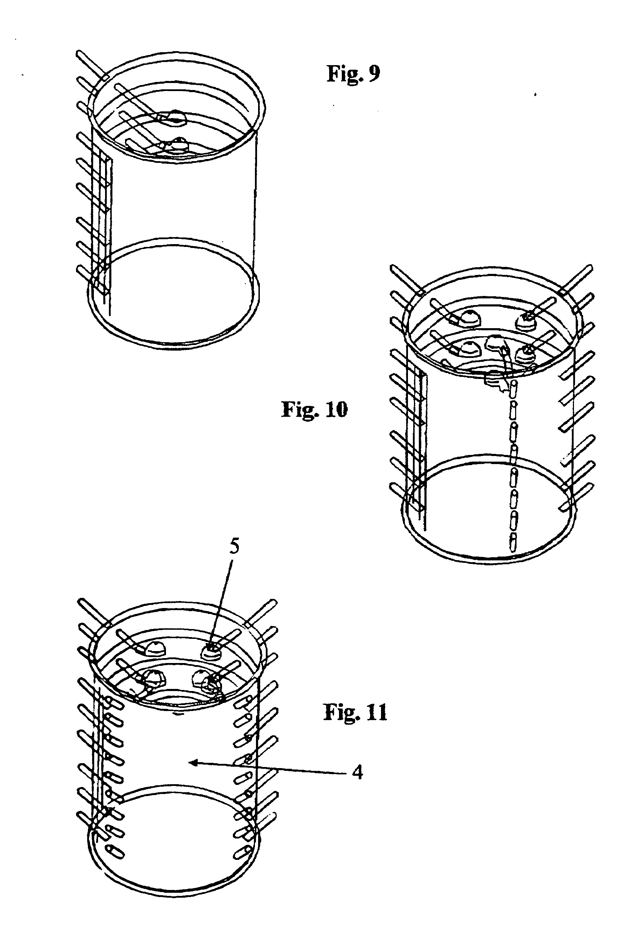

fig. 9 to 11 present scrubbing module (4) equipped with one or many series of spraying nozzles (5);

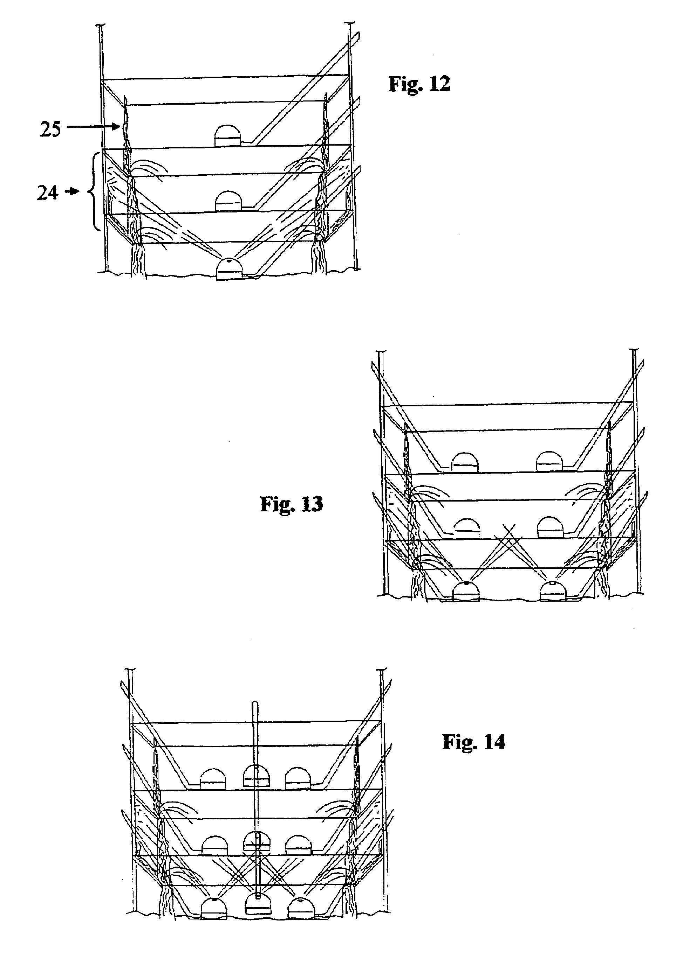

fig. 12 to 14 present the sectional views of scrubbing module (4) equipped with one or many series of spraying nozzles (5) in the nebulization process of scrubbing water (9) and relevant certain ring segments (24) and part of numerous cascades (25) appearing inside of them;

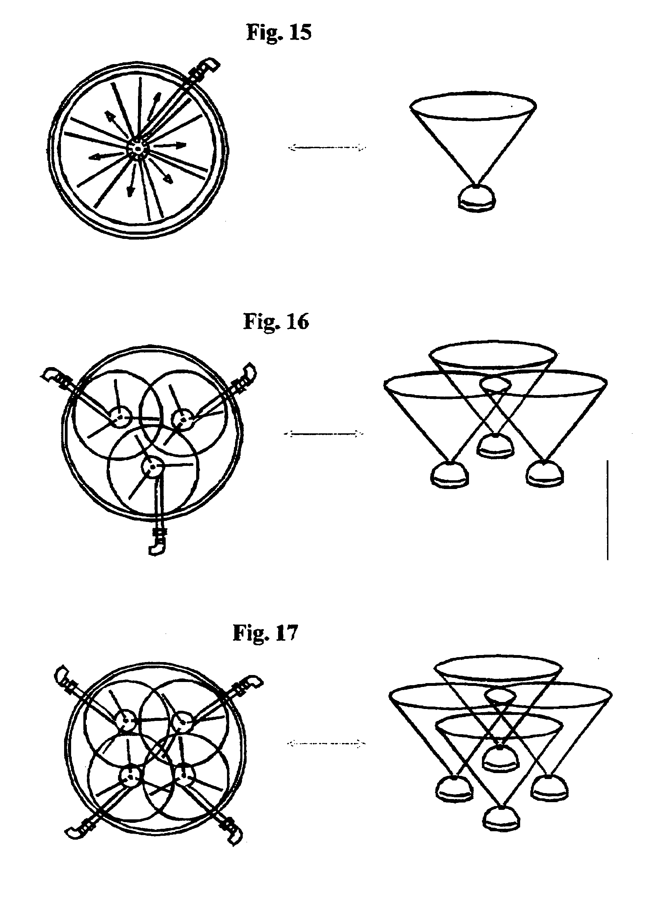

fig. 15 to 17 present the top view of scrubbing module (4) equipped with one or many series of spraying nozzles (5) with the visualization of the geometry of solids consisting the areas of sprayed streams of scrubbing water;
fig. 18 presents the side view of the interior of scrubbing module (4) equipped with one or many series of spraying nozzles (5) and series of conical rings (6);
fig. 19 presents the side view of the interior of scrubbing module (4) equipped with one or many series of spraying nozzles (5) with the visualization of the geometry of solids consisting the areas of sprayed streams;
fig. 20 presents the side view of the interior of scrubbing module (4) with the visualization of the exemplary creation of numerous cascades (25);
fig. 21 presents the side view of the interior of scrubbing module (4) with the visualization of the exemplary creation of nebulized water (9) bed;
fig. 22 presents the view of the ring flow separator (7) made of numerous sections in the form of conical elements;
fig. 23 presents the sectional view of the ring flow separator (7) with the visualization of the up and down movement of a scrubbing liquid as well as its;

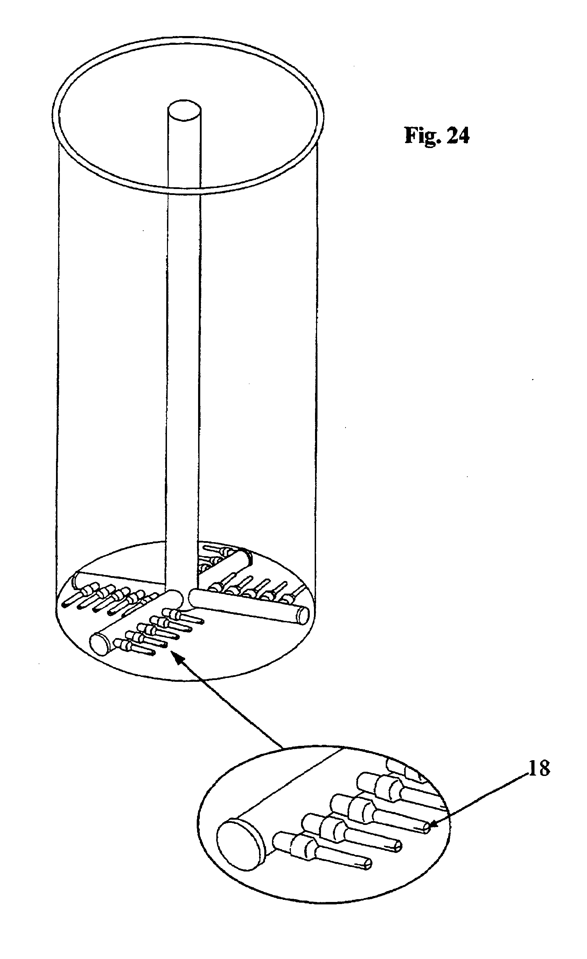

fig. 24 presents the inside of the biological treatment tank with a focus on the distributor (15) and closing flattened flexible tube (18).

In the light of the above description it is obvious that this invention is characterized with numerous advantages and allows to obtain a lot of benefits resulting most of all from the fact that its operation allows to avoid the processing of biological mud and at the same time preventing from friction, congestions and sensitivity to pollution changes, what is more it does not release excessive amounts of CO, NO₂ or CO₂, and one of the outcomes of its execution is the formation of carbonic acid that can be easily neutralized.

## Claims

1. Method of scrubbing polluted gases with scrubbing water combined with a biological treatment of the scrubbing water circulating in a closed cycle between a vertical cylindrical scrubbing tower with at least one scrubbing module (4) and a vertical cylindrically-shaped biological treatment tank to which the scrubbing water is introduced by a central pipe (16), **characterised by** comprising the steps of:
a) introducing the polluted gases into the vertical cylindrical scrubbing tower and setting the gases in ascending spiral motion upwards the scrubbing tower by means of a centrifugal diffuser (3),
b) introducing the scrubbing water into the scrubbing tower by means of numerous spraying nozzles (5) which are arranged in series along defined sectors of each scrubbing module (4), whereas the spraying nozzles (5) spray the scrubbing water onto certain ring segments (24) of the inner wall of the scrubbing tower forming a considerable amount of drops and mist (9) of a very large surface while the gases are bombarded by the sprayed scrubbing water, and
c) the drops and mist (9) precipitate onto numerous coaxial conical rings (6) overlapping the spraying nozzles (5) and arranged on the inner wall of each scrubbing module (4), from which cascades (25) of the scrubbing water come off, which constitutes a factor improving the process of scrubbing, moreover ensuring strong aeration and consequently oxygen absorption by the scrubbing water which despite being polluted contains a large amount of oxygen, wherein the sizes of the coaxial conical rings (6), that are arranged on the inner wall of each scrubbing module (4) between certain ring segments (24) onto which the scrubbing water is sprayed by the spraying nozzles (5), are decreasing in the upward direction of the scrubbing tower, and
d) transferring the scrubbing water from the scrubbing tower to the vertical cylindrically-shaped biological treatment tank wherein
e) the scrubbing water is drained from a central pipe (16) by a distributor (15) arranged at the base of the pipe (16) and provided with a flattened flexible tube closing (18), and next
f) the scrubbing water is uniformly distributed in the first section in the lowest part of the biological treatment tank, as the first section is completely filled with a mesh material (19), through which the upwards flowing scrubbing water in ascending spiral motion does not form preferential routes, and on the mesh material (19) numerous colonies of bacteria are settled, which bacteria convert a large amount of the organic pollution removed from the gases and the oxygen absorbed by the scrubbing water in the scrubbing tower into CO₂ and water, most of all due to very high aeration of the scrubbing water which takes place in the scrubbing tower, and which is of extreme importance as regards the feeding of these microorganisms; then
g) the scrubbing water which is at this moment much less polluted is transported upwards through the next higher second section of the biological treatment tank, the second section is filled with a defined amount of a granulated adsorbing material which adsorbs other pollutions in its macropores, the macropores contain other colonies of bacteria that also convert organic pollution into CO₂ and water; next
h) the scrubbing water, which is at this moment practically clean, still doing the ascending movement is introduced to the next higher third section of the biological treatment tank, the third section is provided with a filtering fabric (23) removing particles of the adsorbing material from the scrubbing water which enriched by the enzymes produced by the microorganisms in the first and second sections of the biological treatment tank returns through a recirculation tank of the scrubbing tower to the spraying nozzles (5) through which it is again sprayed into each scrubbing module (4) of the scrubbing tower.

2. The method according to claim 1, wherein a structure comprising tangled fibres of arched formats made of material selected among PP, PF, PVC and polyamide coated with a powder of adsorbing material is used as the mesh material (19) in the first section of the biological treatment tank.

3. The method according to claim 2, wherein a carbon or an activated carbon is used as the powder of adsorbing material in the first section of the biological treatment tank.

4. The method according to claim 1, wherein an activated carbon is used as the adsorbing material in the second section of the biological treatment tank.

5. The method according to claim 1, wherein the scrubbing tower further comprises a ring flow separator (7) which curtains the scrubbing module (4) or is inside thereof, the ring flow separator (7) is divided into sections in the form of cones (8) arranged coaxially and away from one another forming overlapping shutters, and the scrubbing water is separated by the ring flow separator (7) into independent sectors where separate reactions of absorption occur, and simultaneously various scrubbing processes with the use of various scrubbing waters are carried out in the same scrubbing tower.

6. The method according to claim 1, wherein additional purifying of the scrubbing water is carried out in a second biological treatment tank comprising:
a) the first section (26) partly filled with a layer of activated carbon powder at the concentration from 5 to 70%, dynamically suspended as a result of the motion of the scrubbing water introduced by injection nozzles and bubbles injecting compressed air, forming a uniform mix which ensures close contact between the polluted scrubbing water and the activated carbon;
b) the second section (27) filled with a mesh material (19) coated with activated carbon on which colonies of microorganisms are settled; and
c) the third section (28) formed from a durable filing made of activated carbon or a mix of adsorbing materials.

7. Device for scrubbing polluted gases suitable for implementing the method according to claim 1, the device comprising a vertical cylindrical scrubbing tower with at least one scrubbing module (4) and a vertical cylindrically-shaped biological treatment tank with a central pipe (16) for introducing the scrubbing water from the scrubbing tower, **characterized in that** the scrubbing tower comprises
a) a centrifugal diffuser (3) for introducing and setting the polluted gases in ascending spiral motion upwards the scrubbing tower;
b) numerous spraying nozzles (5) arranged in series along defined sectors of each scrubbing module (4) for introducing scrubbing water into the scrubbing tower;
c) certain ring segments (24) of the inner wall of the scrubbing tower onto which the spraying nozzles (5) spray the scrubbing water at the angle of between 15 and 45° for forming drops and mist (9);
d) numerous coaxial conical rings (6) overlapping the spraying nozzles (5) and arranged on the inner wall of each scrubbing module (4), onto which the drops and mist (9) precipitate and from which cascades (25) of the scrubbing water come off, wherein the sizes of the coaxial conical rings (6), that are arranged on the inner wall of each scrubbing module (4) between certain ring segments (24) onto which the scrubbing water is sprayed by the spraying nozzles (5), are decreasing in the upward direction of the scrubbing tower; and
e) a recirculation tank;
and the biological treatment tank comprises:
f) a distributor (15) arranged at the base of a pipe (16) for draining the scrubbing water therefrom, and the distributor (15) is provided with a flattened flexible tube closing (18);
g) the first section in the lowest part of the biological treatment tank completely filled with a mesh material (19) through which the upwards flowing scrubbing water in ascending spiral motion does not form preferential routes for uniformly distributing the scrubbing water; on the mesh material (19) numerous colonies of bacteria are settled for converting a large amount of the organic pollution removed from the gases and the oxygen absorbed by the scrubbing water in the scrubbing tower into CO₂ and water;
h) the next higher second section of the biological treatment tank is filled with a defined amount of a granulated adsorbing material for adsorbing other pollution in its macropores that contain other colonies of bacteria for converting organic pollution into CO₂ and water; and
i) the next higher third section of the biological treatment tank provided with a filtering fabric (23) for removing particles of the adsorbing material from the scrubbing water;
wherein the scrubbing water enriched by the enzymes produced by the microorganisms in the first and second sections of the biological treatment tank returns through the recirculation tank of the scrubbing tower to the spraying nozzles (5) through which it is again sprayed into each scrubbing module (4) of the scrubbing tower.

8. The device according to claim 7, wherein a structure comprising tangled fibres of arched formats made of material selected among PP, PF, PVC and polyamide coated with a powder of adsorbing material is used as the mesh material (19) in the first section of the biological treatment tank.

9. The device according to claim 8, wherein a carbon or an activated carbon is used as the powder of adsorbing material in the first section of the biological treatment tank.

10. The device according to claim 7, wherein an activated carbon is used as the adsorbing material in the second section of the biological treatment tank.

11. The device according to claim 7, wherein the scrubbing tower further comprises a ring flow separator (7) which curtains the scrubbing module (4) or is inside thereof, the ring flow separator (7) is divided into sections in the form of cones (8) arranged coaxially and away from one another forming overlapping shutters, and the scrubbing water is separated by the ring flow separator (7) into independent sectors where separate reactions of absorption occur, and simultaneously various scrubbing processes with the use of various scrubbing waters are carried out in the same scrubbing tower.

12. The device according to claim 2, further comprising a second biological treatment tank for additional purifying the scrubbing water, the second biological treatment tank comprises:
a) the first section (26) partly filled with a layer of activated carbon powder at the concentration from 5 to 70%, dynamically suspended as a result of the motion of the scrubbing water introduced by injection nozzles and bubbles injecting compressed air, forming a uniform mix which ensures close contact between the polluted scrubbing water and the activated carbon;
b) the second section (27) filled with a mesh material (19) coated with activated carbon on which colonies of microorganisms are settled; and
c) the third section (28) formed from a durable filing made of activated carbon or a mix of adsorbing materials.

## Patentansprüche

1. Die Methode der Reinigung der verunreinigten Gase mit Spülwasser in Verbindung mit biologischer Behandlung dieses Spülwassers, das im geschlossenen Kreislauf fließt mittels eines vertikalen, zylindrischen Waschturmes mit mindestens einem Spülmodul (4) und einem vertikalen, zylindrischen Behälter für die biologische Behandlung, an den durch den Einsatz des Zentralrohres (16) das Spülwasser eingeleitet wird, wobei sich diese Methode **dadurch kennzeichnet, dass** sie aus folgenden Etappen besteht:
a) die verunreinigten Gase werden in den vertikalen, zylindrischen Waschturm eingeleitet und in eine in das obere Teil des Spülturmes befördernde, spiralige Bewegung beim Einsatz des zentrifugalen Diffusors (3) gebracht,
b) das Spülwasser wird in den Spülturm durch den Einsatz zahlreicher Sprühdüsen (5) eingeleitet, die seriell entlang den entsprechenden Sektoren des jeweiligen Spülmoduls (4) angeordnet sind, während die Sprühdüsen (5) das Spülwasser auf die entsprechenden Ringsegmente (24) der Innenwand des Spülturmes sprühen und große Mengen von Kondensat und Nebel (9) mit einer großen Oberfläche bildend, wobei diese Gase durch das versprühte Spülwasser bombardieren, und
c) das Kondensat und der Nebel (9) setzen sich an zahlreichen, koaxialen Kegelringen (6) ab, welche die Sprühdüsen (5) überdecken und sich an der Innenwand eines jeden einzelnen Spülmoduls (4) befinden, wovon die Spülwasserkaskaden (25) austreten, was den Verbesserungsfaktor des Spülprozesses bildet und darüber hinaus eine starke Belüftung und zuletzt die Aufnahme des Sauerstoffs durch das Spülwasser gewährt, das - obwohl verunreinigt - viel Sauerstoff enthält, wo sich die Abmessungen der koaxialen Kegelringen (6), die sich an der Innenwand eines jeden einzelnen Spülmoduls (4) zwischen den entsprechenden Ringsegmenten (24) befinden, auf die das Spülwasser unter dem Einsatz der Sprühdüsen (5) gesprüht wird, nach Oben des Spülturmes verkleinern, und
d) das Spülwasser wird vom Spülturm zum vertikalen, zylindrischen Behälter zwecks biologischer Behandlung befördert, wo
e) das Spülwasser durch das Zentralrohr (16), durch den Verteiler (15), der sich am Fußstück des Rohres (16) befindet und in eine flache, flexible Leitungsabsperrung (18) ausgestattet ist, abgelassen, und danach
f) wird das Spülwasser gleichmäßig in erster Sektion des tiefsten Teil des Behälters für die biologische Behandlung verdünnt, denn die erste Sektion ist vollständig mit Netzmaterial (19) gefüllt, durch das das nach oben spiralartig aufsteigend fließende Spülwasser keine Vorzugsstrecken bildet, und am Netzmaterial (19) befindet sich eine ganze Reihe von Bakterienkolonien, welche die großen Mengen an organischen Verschmutzungen, die aus Gasen entfernt wurden, und den Sauerstoff, der durch das Spülwasser im Spülturm aufgenommen wurde, in CO₂ und Wasser umwandeln, hauptsächlich aufgrund der sehr hohen Belüftung des Spülwassers, was im Spülturm stattfindet und was eine kritische Bedeutung im Kontext der Ernährung dieser Mikroorganismen hat; danach
g) wird das Spülwasser, dass zu diesem Zeitpunkt wesentlich weniger verunreinigt ist, nach Oben durch eine weitere, zweite Sektion des Behälters für die biologische Behandlung transportiert, wobei diese zweite Sektion mit einer bestimmten Menge an Adsorbergranulat gefüllt ist, der die anderen Verunreinigungen in den Makroporen adsorbiert, diese Makroporen enthalten andere Bakterienkolonien, die ebenso die organischen Verschmutzungen in CO₂ und Wasser umwandeln; danach
h) steigt das Spülwasser, das zu diesem Zeitpunkt praktisch sauber ist, weiterhin nach Oben, es wird in die weitere, höhere, dritte Sektion des Behälters für die biologische Behandlung eingeleitet, wobei diese Sektion in ein Filtrationsgewebe (23), das die Überreste des Adsorbergranulates aus dem Spülwasser entfernt, ausgestattet ist, und das - um die durch die Mikroorganismen in der ersten und zweiten Sektion des Behälters für die biologische Behandlung produzierten Enzyme angereichert - durch den Rückführungsbehälter des Spülturmes zu den Sprühdüsen (5), durch welche es wieder in das jede einzelne Spülmodul des Spülturmes zurück geführt wird.

2. Die Methode gemäß Vorbehalt 1 zeichnet sich dadurch aus, dass der Aufbau, der die verflochtenen Faden im Bogenformat enthält, gefertigt von aus PP, PF, PVC und Polyamid benetzt mit Adsorberpulver ausgewählten Material, als Netzmaterial (19) in der ersten Sektion des Behälters für die biologische Behandlung angewendet wird.

3. Die Methode gemäß Vorbehalt 2, die sich **dadurch kennzeichnet, dass** die Kohle oder die Aktivkohle als Adsorptionspulver in der ersten Sektion des Behälters für die biologische Behandlung angewendet werden.

4. Die Methode gemäß Vorbehalt 1, die sich **dadurch kennzeichnet, dass** die Aktivkohle als Adsorptionsmaterial in der zweiten Sektion des Behälters für die biologische Behandlung angewendet wird

5. Die Methode gemäß Vorbehalt 1, die sich **dadurch kennzeichnet, dass** der Spülturm in Weiterem einen Ringdurchflussabscheider (7) enthält, der das Spülmodul (4) bedeckt oder sich in dessen Inneren befindet und dieser Durchflussabscheider (7) ist auf drei Sektionen in Kegelform (8) untergeteilt, die koaxial zueinander angeordnet und voneinander entfernt sind, dabei übereinander überlappende Blenden bildend, und das Spülwasser wird durch den Ringdurchflussabscheider (7) auf die unabhängigen Sektore geteilt, in denen die verschiedenen Spülprozesse unter Anwendung unterschiedlicher Spülwässer stattfinden.

6. Die Methode gemäß Vorbehalt 1, die sich **dadurch kennzeichnet, dass** die zusätzliche Reinigung des Spülwassers im zweiten Behälter für die Biologische Behandlung erfolgt, der aus folgenden Teilen besteht:
a) erste Sektion (26), die teilweise mit einer Schicht Aktivkohle in einer Konzentration von 5 bis 70% ausgefüllt ist, die dynamisch infolge der Bewegung des Spülwassers, das durch die Einspritzdüsen eingeleitet wird und die Pressluftblasen suspendiert wird, dabei ein homogenes Gemisch bildend, das einen engen Kontakt des verunreinigten Reinigungswassers mit der Aktivkohle sicherstellt;
b) zweite Sektion (27) gefüllt mit Netzmaterial (19), benetzt mit Aktivkohle, auf der sich die Kolonien der Mikroorganismen setzen; und
c) dritte Sektion (28) gebildet aus einer dauerhaften Füllung aus Aktivkohle oder einem Gemisch aus Adsorptionsstoffen.

7. Die Anlage für die Reinigung verschmutzter Gase, entsprechend für die Anwendung der Methode laut Vorbehalt 1, wobei solche Anlage aus einem vertikalen, zylindrischen Spülturm mit mindestens einem Spülmodul (4) und einem vertikalen, zylindrischen Behälter für die biologische Behandlung mit einem Zentralrohr (16) zur Einleitung des Spülwassers aus dem Spülturm besteht, kennzeichnet sich dadurch, dass der Spülturm aus folgenden Teilen besteht:
a) zentrifugaler Diffusor (3), der die verunreinigten Gase in eine spiralige, in das obere Teil des Spülturmes befördernde Bewegung bringt;
b) zahlreiche Sprühdüsen (5), die seriell entlang den entsprechenden Sektoren des jeden einzelnen Spülmoduls (4) für die Einleitung des Spülwassers in den Spülturm angeordnet sind;
c) bestimmte Ringsegmente (24) der Innenwand des Spülturmes, auf die die Sprühdüsen (5) das Spülwasser unter einem Neigungswinkel von 15 bis 45° aufsprühen, um Kondensat und Nebel (9) zu bilden;
d) zahlreiche koaxiale Kegelringe (6) die die Sprühdüsen (5) überlappen und die sich an der Innenwand eines jeden einzelnen Spülmoduls (4) befinden, auf denen sich das Kondensat und der Nebel (9) niederschlagen und aus denen die Spülwasserkaskaden (25) abfließen, wobei die Abmessungen der koaxialen Kegelringe (6), die sich an der Innenwand eines jeden Spülmoduls (4) zwischen den bestimmten Ringsegmenten (24), auf die das Spülwasser unter dem Einsatz von Sprühdüsen (5) aufgesprüht wird, befinden, nach Oben im Spülturm kleiner werden, und
e) Rückführungsbehälter, wobei der Behälter für die biologische Behandlung aus folgenden Teilen besteht :
f) Verteiler (15), der sich am Fußstück des Rohres (15) für die Ablassung des Spülwassers befindet, und dieser Verteiler ist in eine flache, flexible Leitungsabsperrung (18);
g) erste Sektion des tiefsten Teiles des Behälters für die biologische Behandlung, die vollständig mit Netzmaterial (19) ausgefüllt ist, durch das das nach oben spiralenartig aufsteigend fließende Spülwasser keine Vorzugsstrecken bildet, um das Spülwasser gleichmäßig zu verteilen; auf dem Netzmaterial (19) befindet sich eine ganze Reihe von Bakterienkolonien, welche die großen Mengen an organischen Verschmutzungen, die aus Gasen entfernt wurden, und den Sauerstoff, der durch das Spülwasser im Spülturm aufgenommen wurde, in CO₂ und Wasser umwandeln;
h) eine weitere, zweite Sektion des Behälters für die biologische Behandlung, die mit einer bestimmten Menge an Adsorbergranulat gefüllt ist, der die anderen Verunreinigungen in dessen Makroporen adsorbiert, die andere Bakterienkolonien enthalten, die die organischen Verschmutzungen in CO₂ und Wasser umwandeln; und
i) eine weitere, höhere, dritte Sektion des Behälters für die biologische Behandlung, ausgestattet in ein Filtrationsgewebe (23), das die Teilchen des Adsorptionsmaterials aus dem Spülwasser entfernt;
wo das Spülwasser, angereichert um Enzyme, die durch die Mikroorganismen in der ersten und zweiten Sektion des Behälters für die biologische Behandlung produziert werden, durch den Rückführungsbehälter des Spülturmes zu den Sprühdüsen (5), durch welche es wieder in das jede einzelne Spülmodul des Spülturmes zurück geführt wird.

8. Anlage gemäß Vorbehalt 7, die sich **dadurch kennzeichnet, dass** der Aufbau, der die verflochtenen Faden im Bogenformat enthält, gefertigt vom aus PP, PF, PVC und Polyamid benetzt mit Adsorberpulver ausgewählten Material, als Netzmaterial (19) in der ersten Sektion des Behälters für die biologische Behandlung angewendet wird

9. Anlage gemäß Vorbehalt 8, die sich **dadurch kennzeichnet, dass** die Kohle oder die Aktivkohle als Adsorptionspulver in der ersten Sektion des Behälters für die biologische Behandlung angewendet werden.

10. Anlage gemäß Vorbehalt 7, die sich **dadurch kennzeichnet, dass** die Aktivkohle als Adsorptionsmaterial in der zweiten Sektion des Behälters für die biologische Behandlung angewendet wird.

11. Anlage gemäß Vorbehalt 7, die sich **dadurch kennzeichnet, dass** der Spülturm in Weiterem einen Ringdurchflussabscheider (7) enthält, der das Spülmodul (4) bedeckt oder sich in dessen Inneren befindet und dieser Durchflussabscheider (7) ist auf drei Sektionen in Kegelform (8) untergeteilt, die koaxial zueinander angeordnet und voneinander entfernt sind, dabei übereinander überlappende Blenden bildend, und das Spülwasser wird durch den Ringdurchflussabscheider (7) auf die unabhängigen Sektore geteilt, in denen die getrennten Adsorptionsprozesse stattfinden und gleichzeitig in dem selben Spülturm die verschiedenen Spülprozesse unter Anwendung unterschiedlicher Spülwässer erfolgen.

12. Anlage gemäß Vorbehalt 2, die in der weiteren Reihenfolge einen zweiten Behälter für die biologische Behandlung für die zusätzliche Reinigung des Spülwassers enthält, wobei besteht der zweite Behälter für die biologische Behandlung aus folgenden Teilen:
a) erste Sektion (26) die teilweise mit einer Schicht Aktivkohle in einer Konzentration von 5 bis 70% ausgefüllt ist, die dynamisch infolge der Bewegung des Spülwassers, das durch die Einspritzdüsen eingeleitet wird und die Pressluftblasen suspendiert wird, dabei ein homogenes Gemisch bildend, das einen engen Kontakt des verunreinigten Reinigungswassers mit der Aktivkohle sicherstellt;
b) zweite Sektion (27) gefüllt mit Netzmaterial (19), benetzt mit Aktivkohle, auf der sich die Kolonien der Mikroorganismen setzen; sowie
c) dritte Sektion (28) gebildet aus einer dauerhaften Füllung aus Aktivkohle oder einem Gemisch aus Adsorptionsstoffen.

## Revendications

1. Un procédé d'épuration des gaz pollués avec de l'eau de lavage, combiné avec un traitement biologique de cette eau de lavage qui circule dans un circuit fermé entre une tour de lavage cylindrique verticale avec au moins un module de lavage (4) et un bac vertical cylindrique de traitement biologique, auquel l'eau de lavage est introduite par un tube central (16), **caractérisé par le fait qu'**il comprend les étapes suivants :
a) les gaz pollués sont introduits dans la tour de lavage cylindrique verticale et mis en mouvement en spirale ascendant vers le haut de la tour de lavage à l'aide d'un diffuseur centrifuge (3),
b) l'eau de lavage est introduite dans la tour de lavage par de nombreuses buses de pulvérisation (5) qui sont disposées en série le long de secteurs définis de chaque module de nettoyage (4), tandis que les buses de pulvérisation (5) pulvérisent l'eau de lavage sur certains segments annulaires (24) de la paroi intérieure de la tour de lavage, formant des quantités importantes de gouttes et de brouillard (9) d'une très grande surface, tandis que les gaz sont bombardés par l'eau de lavage pulvérisée, et
c) les gouttes et le brouillard (9) se précipitent sur plusieurs bagues coniques coaxiales (6), qui se chevauchent sur les buses de pulvérisation (5) et sont disposées sur la paroi interne de chaque module de lavage (4), d'où sortent les cascades (25) de l'eau de lavage, ce qui constitue un facteur améliorant du processus de lavage, assurant en outre une forte aération et par conséquent l'absorption de l'oxygène par l'eau de lavage qui, en dépit de sa pollution, contient une grande quantité d'oxygène, en quoi les dimensions des bagues coniques coaxiales (6), disposées sur la paroi interne de chaque module de lavage (4) entre les certains segments annulaires (24), sur qui l'eau de lavage est pulvérisée par les buses de pulvérisation (5), décroissent dans la direction vers le haut de la tour de lavage, et
d) l'eau de lavage est transférée à partir de la tour de lavage au bac vertical cylindrique de traitement biologique, où
e) l'eau de lavage est évacuée par le tube central (16) par l'intermédiaire d'un distributeur (15) disposé à la base du tube (16) et muni d'une fermeture à tube souple aplati (18), et ensuite
f) l'eau de lavage est distribuée uniformément dans la première section dans la partie la plus basse du bac de traitement biologique, vu que la première section est complètement remplie d'un matériau à mailles (19), à travers lequel l'eau de lavage qui s'écoule vers le haut en spirale ne forme pas des voies préférentielles, et sur la matière de maille (19), sont installées de nombreuses colonies de bactéries qui convertissent une quantité importante de la pollution organique éliminée des gaz et l'oxygène absorbé par l'eau de lavage dans la tour de lavage en CO₂ et en eau, surtout en raison de très haute aération de l'eau de lavage ce qui a lieu dans la tour de lavage, et qui est d'une extrême importance en ce qui concerne l'alimentation de ces micro-organismes; puis
g) l'eau de lavage, qui est à ce moment beaucoup moins polluée, est transportée vers le haut à travers la suivante, supérieure, deuxième section du bac de traitement biologique, et cette deuxième section est remplie d'une quantité définie d'un matériau adsorbant en granulés, qui adsorbe d'autres pollutions dans ses macropores, ces macropores contenant d'autres colonies de bactéries qui transforment aussi la pollution organique en CO₂ et en eau; ensuite
h) l'eau de lavage, qui à ce moment est pratiquement propre, toujours monte et est introduite dans la suivante, supérieure, troisième section du bac de traitement biologique, la troisième section étant pourvue d'un tissu de filtration (23) éliminant les particules du matériau adsorbant de l'eau de lavage qui - enrichie en enzymes produits par des micro-organismes de la première et la deuxième section du bac de traitement biologique - revient par le bac de recirculation de la tour de lavage aux buses de pulvérisation (5) à travers lesquelles elle est de nouveau pulvérisée dans chaque module de lavage (4) de la tour de lavage.

2. Le procédé selon la revendication 1, **caractérisé par le fait que** la structure comprenant des fibres enchevêtrées de formats arqués en matériau choisi parmi le PP, le PF, le PVC et le polyamide revêtu de poudre de matériau adsorbant est utilisée comme matériau à mailles (19) dans la première section du bac de traitement biologique.

3. Le procédé selon la revendication 2, **caractérisé par le fait que** le carbone ou le carbone actif est utilisé en qualité de la poudre de matériau adsorbant dans la première section du bac de traitement biologique.

4. Le procédé selon la revendication 1, **caractérisé par le fait que** le carbone actif est utilisé en qualité du matériau adsorbant dans la deuxième section du bac de traitement biologique.

5. Le procédé selon la revendication 1, **caractérisé par le fait que** la tour de lavage comprend ensuite un séparateur de flux annulaire (7) qui recouvre le module de lavage (4) ou se trouve à l'intérieur de celui-ci, et le séparateur de flux annulaire (7) est divisé en sections en forme de cônes (8) disposés coaxialement et à distance les uns des autres, formant des volets qui se chevauchent, et l'eau de lavage est séparée par le séparateur de flux annulaire (7) en secteurs indépendants où des réactions séparées d'adsorption se produisent, et en même temps, dans la même tour de lavage, de différents procédés de lavage ont lieu, à l'aide de divers eaux de lavage.

6. Le procédé selon la revendication 1, **caractérisé par le fait que** la purification supplémentaire de l'eau de lavage est réalisée dans le deuxième bac de traitement biologique, comprenant :
a) la première section (26) partiellement remplie d'une couche de poudre de carbone actif à la concentration de 5 à 70%, accroché de manière dynamique à la suite du mouvement de l'eau de lavage introduite par des buses d'injection et des bulles injectant l'air comprimé, formant ainsi un mélange uniforme assurant un contact étroit de l'eau de lavage polluée et du carbone actif ;
b) la deuxième section (27) remplie d'un matériau à mailles (19) revêtu de carbone actif sur lequel les colonies de micro-organismes sont installées ; et
c) la troisième section (28) formée à partir d'un dépôt solide en carbone actif ou en mélange de matériaux adsorbants.

7. Un dispositif d'épuration des gaz pollués approprié pour la mise en oeuvre du procédé selon la revendication 1, le dispositif comprenant une tour de lavage cylindrique verticale avec au moins un module de lavage (4) et un bac vertical cylindrique de traitement biologique avec un tube central (16) servant à introduire l'eau de lavage à partir de la tour de lavage, **caractérisé par le fait que** la tour de lavage comprend :
a) un diffuseur centrifuge (3) introduisant et mettant les gaz pollués en mouvement en spirale ascendant vers le haut de la tour de lavage ;
b) nombreuses buses de pulvérisation (5) disposés en série le long de secteurs définis de chaque module de lavage (4) pour introduire l'eau de lavage dans la tour de lavage;
c) certains segments annulaires (24) de la paroi intérieure de la tour de lavage, sur laquelle les buses de pulvérisation (5) pulvérisent l'eau de lavage à l'angle compris entre 15° et 45° afin de former le et le brouillard (9) ;
d) nombreuses bagues coniques coaxiales (6) qui se chevauchent sur les buses de pulvérisation (5) et sont disposées sur la paroi interne de chaque module de lavage (4), sur lesquelles les gouttes et le brouillard (9) se précipitent et à partir desquelles des cascades (25) de l'eau de lavage se détachent, où les dimensions de bagues coniques coaxiales (6), disposées sur la paroi interne de chaque module de lavage (4) entre les certains segments annulaires (24) sur lesquels l'eau de lavage est pulvérisée par les buses de pulvérisation (5), diminuent dans la direction vers le haut de la tour de lavage, et
e) un bac de recirculation, et le bac de traitement biologique comprend :
f) un distributeur (15) situé à la base du tube (16) servant à drainer l'eau de lavage de celui-ci, et ce distributeur (15) est muni d'un tube souple aplati servant de fermeture (18) ;
g) la première section dans la partie la plus basse du bac de traitement biologique entièrement remplie d'un matériau à mailles (19) à travers duquel l'eau de lavage qui s'écoule vers le haut en mouvement en spirale ascendant ne forme pas de voies préférentielles pour distribuer uniformément l'eau de lavage ; sur le matériau à mailles (19) de nombreuses colonies de bactéries sont installées pour convertir une quantité importante de la pollution organique éliminée des gaz et l'oxygène absorbé par l'eau de lavage dans la tour de lavage en CO₂ et en eau ;
h) la suivante, supérieure, deuxième section du bac de traitement biologique est remplie d'une quantité définie d'un matériau adsorbant en granulés, qui adsorbe d'autres pollutions dans ses macropores qui contiennent d'autres colonies de bactéries qui convertissent la pollution organique en CO₂ et en eau ; et
i) la suivante, supérieure, troisième section du bac de traitement biologique, pourvue d'un tissu de filtration (23) éliminant les particules du matériau adsorbant de l'eau de lavage ;
où l'eau de lavage, enrichie en enzymes produits par des micro-organismes de la première et la deuxième section du bac de traitement biologique, revient par le bac de recirculation de la tour de lavage aux buses de pulvérisation (5) à travers lesquelles elle est de nouveau pulvérisée dans chaque module de lavage (4) de la tour de lavage.

8. Le dispositif selon la revendication 7, **caractérisé par le fait que** la structure comprenant des fibres enchevêtrées de formats arqués en matériau choisi parmi le PP, le PF, le PVC et le polyamide revêtu de poudre de matériau adsorbant, est utilisé comme matériau à mailles (19) dans la première section du bac de traitement biologique.

9. Le dispositif selon la revendication 8, **caractérisé par le fait que** le carbone ou le carbone actif est utilisé en qualité de la poudre de matériau adsorbant dans la première section du bac de traitement biologique.

10. Le dispositif selon la revendication 7, **caractérisé par le fait que** le carbone actif est utilisé en qualité du matériau adsorbant dans la deuxième section du bac de traitement biologique.

11. Le dispositif selon la revendication 7, **caractérisé par le fait que** la tour de lavage comprend ensuite un séparateur de flux annulaire (7) qui recouvre le module de lavage (4) ou se trouve à l'intérieur de celui-ci, et le séparateur de flux annulaire (7) est divisé en sections en forme de cônes (8) disposés coaxialement et à distance les uns des autres, formant des volets qui se chevauchent, et l'eau de lavage est séparée par le séparateur de flux annulaire (7) en secteurs indépendants où des réactions séparées d'adsorption se produisent, et en même temps, dans la même tour de lavage, de différents procédés de lavage ont lieu, à l'aide de divers eaux de lavage.

12. Le dispositif selon la revendication 2, en plus comprenant un deuxième bac de traitement biologique pour l'épuration supplémentaire de l'eau de lavage, en quoi le deuxième bac de traitement biologique comprend :
a) la première section (26) partiellement remplie d'une couche de poudre de carbone actif à la concentration de 5 à 70%, accroché de manière dynamique à la suite du mouvement de l'eau de lavage introduite par des buses d'injection et des bulles injectant l'air comprimé, formant ainsi un mélange uniforme assurant un contact étroit de l'eau de lavage polluée et du carbone actif ;
b) la deuxième section (27) remplie d'un matériau à mailles (19) revêtu de carbone actif sur lequel les colonies de micro-organismes sont installées ; et
c) la troisième section (28) formée à partir d'un dépôt solide en carbone actif ou en mélange de matériaux adsorbants.
